# EUROPÄISCHE PATENTSCHRIFT

(11) **EP 2 062 675 B1**
(45) Veröffentlichungstag und Bekanntmachung des Hinweises auf die Patenterteilung: **20.01.2010**
(21) Anmeldenummer: 07022470.4
(22) Anmeldetag: 20.11.2007
(51) Int. Cl.: B23K 26/04

(54) **Verfahren zum Bestimmen einer Kenngröße für die Genauigkeit einer Nahtlageregelung**
Method for determining a parameter for seam position regulation precision
Procédé de détermination d'une grandeur caractéristique pour la précision du réglage de la position d'un fil

(43) Veröffentlichungstag der Anmeldung: 27.05.2009
(73) Patentinhaber: TRUMPF Werkzeugmaschinen GmbH + Co. KG, 71254 Ditzingen (DE)
(72) Erfinder: Hesse, Tim, 71254 Ditzingen (DE); Pfitzner, Dieter, 71263 Weil der Stadt (DE); Magg, Winfried, 71254 Ditzingen (DE)
(74) Vertreter: Kohler Schmid Möbus

(56) Entgegenhaltungen:
- EP-A- 1 371 443
- DE-A1- 4 005 314
- US-A- 6 040 550
- US-A1- 2002 088 778

## Beschreibung

Die vorliegende Erfindung betrifft ein Verfahren zum Bestimmen mindestens einer Kenngröße für die Genauigkeit der Nahtlageregelung eines Laserschweißprozesses an einem bevorzugt rotationssymmetrischen Werkstück.

Beim Laserstrahlschweißen von Getriebekomponenten werden hohe Anforderungen an die Positionierung des Laserstrahls zum Fügespalt bzw. zur Fügestelle und damit an die resultierende Schweißnahtqualität gestellt. Insbesondere neue Schweißprozesse wie das Schweißen von Stahl mit Stahlguss ohne Zusatzwerkstoff setzen aus metallurgischen Gründen eine Nahtpositionierung in einem Toleranzbereich weniger hundertstel Millimeter voraus.

Um diese Genauigkeitsanforderungen erfüllen zu können, wird eine automatische Nahtverfolgung eingesetzt. Diese Nahtverfolgung erfasst mit einer projizierten Laserlichtlinie (Laserlichtschnitt), die dem Schweißprozess vorlaufend angeordnet ist und die von einer Kamera detektiert wird, die Lage der Fügestelle. Ausgehend von dieser Messung wird der Bearbeitungslaserstrahl bzw. dessen Fokusfläche über eine Stellachse am Laserbearbeitungskopf zum richtigen Zeitpunkt korrekt zur Fügestelle des Werkstücks positioniert. Bei der Nahtlageregelung sind jedoch eine Reihe von Einzelkomponenten beteiligt, die Störungen unterworfen sein können. Typische Beispiele für solche Störungen sind: lokale mechanische Beschädigungen der Fügestelle; fehlerhafte Einspannung von z.B. rotationssymmetrischen Werkstücken, die zu einer starken Taumelbewegung der Werkstücke führen kann; durch den Schweißprozess thermisch induzierte Bildstörungen des vorlaufenden Lichtschnitts; Versatz oder thermisch induzierte Driftbewegung des Laserstrahls in der Schweißoptik; Fehlfunktionen der Sensorik durch Verschmutzung usw.

Diese Störungen können dazu führen, dass die tatsächliche Nahtlageregelung außerhalb der zulässigen Toleranz verläuft oder zumindest nicht vertrauenswürdig ist. In beiden Fällen muss ein Werkstück nach der Fertigstellung der Schweißnaht aus der Fertigungskette ausgeschleust und einer manuellen Bauteilprüfung bzw. -freigabe zugeführt werden. Eine Messung der tatsächlichen Regelabweichung von der Nahtposition zur Fügestelle ist während des Schweißprozesses nicht möglich. Demgegenüber ist eine Messung einer Vielzahl von Einzeleingangsgrößen bzw. - störungen während des Schweiß- bzw. Regelungsprozesses möglich.

Aus der US 6 040 550 sind eine Vorrichtung und ein Verfahren zum geregelten Laserschweißen einer Radialnaht an einer Fügestelle zwischen zwei Membranen eines Faltenbalgs bekannt geworden. Eine optische Verfolgungseinrichtung ist zur Verfolgung der Fügestelle der nebeneinander angeordneten und um eine gemeinsame Achse rotierenden Membranen vorgesehen. Weiterhin sind Mittel zur Steuerung des Laserstrahls vorgesehen, welche ein Kantenschweißen der rotierenden Membranen an der Fügestelle erlauben, so dass der Laserstrahl gleichzeitig auf den äußeren Rand jeder der beiden Membranen auftrifft.

Die DE 40 05 314 A1 beschreibt ein Verfahren zum Mikrolöten mittels eines Lasers, bei dem eine Temperaturregelung vorgenommen wird. Durch Auswerten des bei der Regelung verwendeten ist- bzw. Stellsignals können Aussagen über den Lötprozess sowie ggf. auftretende Lötfehler gemacht werden, was zu einer verbesserten Prozesskontrolle beim Löten führen soll.

Die EP 1 371 443 B1 beschreibt ein System und ein Verfahren zum Überwachen von Schweißnähten sowie zur Beurteilung der Schweißqualität beim Laserschweißen. Hierbei wird sowohl die Strahlung, die im Schweißgebiet produziert wird, als auch die Leistung des Laserstrahls mit Hilfe von Sensoren gemessen. Die gemessenen Signale werden im Hinblick auf ihre Qualitätseigenschaften untersucht, indem jeweils eine Interpolationsfunktion erzeugt wird und aus den Abweichungen des jeweiligen Signals von der Interpolationsfunktion Kennziffern extrahiert werden. Die Qualitätseigenschaften der Signale werden nachfolgend klassifiziert, um einen Hinweis auf die Qualität der Schweißung zu geben.

Aus der US 2002/088778 A1 ist ein Verfahren zum geregelten Laserschweißen einer Radialnaht an einer Fügestelle zwischen zwei Membranen eines Faltenbalgs bekannt geworden, bei dem zur Vereinfachung an Stelle einer kontinuierlichen Nahtverfolgung nur einige Referenzpunkte auf den zu verschweißenden Rändern bestimmt werden. Der Verlauf der Sollposition einer Stellachse zum Positionieren der Fokusfläche des Laserstrahls wird hierbei punktuell an Referenzpunkten bestimmt und zwischen den Referenzpunkten der Verlauf der Fügestelle mit Hilfe von Interpolationsfunktionen abgeschätzt.

### Aufgabe der Erfindung

Es ist die Aufgabe der vorliegenden Erfindung, ein Verfahren bereitzustellen, welches die Bestimmung mindestens einer Kenngröße für die Genauigkeit der Nahtlageregelung eines Laserschweißprozesses und damit die Überprüfung und Bewertung der Qualität der Nahtlageregelung ermöglicht.

### Gegenstand der Erfindung

Diese Aufgabe wird erfindungsgemäß gelöst durch ein Verfahren der eingangs genannten Art, umfassend die Schritte: Ermitteln des zeitlichen Verlaufs einer Soll- oder Istposition einer Stellachse zum Positionieren einer Fokusfläche eines Laserstrahls auf dem Werkstück, Ermitteln des Verlaufs einer Fügestelle an dem Werkstück aus dem Verlauf der Soll- oder Istposition der Stellachse, sowie Bestimmen einer Abweichung zwischen dem Verlauf der Soll- oder Istposition der Stellachse und dem ermittelten Verlauf der Fügestelle als Kenngröße für die Genauigkeit der Nahtlageregelung.

Beim erfindungsgemäßen Verfahren wird die Stellachsen-Sollposition, d.h. die aus der Laserlichtschnittmessung resultierende und als Stellgröße für die Bewegung der Korrekturachse(n) (Stellachse(n)) dienende Positionsvorgabe, oder die Stellachsen-Istposition, d.h. die tatsächliche Position der Korrekturachse(n), während des Laserschweißprozesses gemessen und gespeichert. Die Stellachsen können hierbei am Laserbearbeitungskopf angeordnet sein und zur Bewegung des gesamten Kopfes dienen. Sie können alternativ auch an einem oder mehreren optischen Elementen im Strahlengang des Laserstrahls angeordnet sein und eine Bewegung des optischen Elements, also beispielsweise das Verschieben und/oder Verkippen eines Spiegels oder einer Linse oder das Verschieben eines Lichtleitfaser-Anschlusses im Laserbearbeitungskopf bewirken. Aus dem zeitlichen Verlauf der Soll- bzw. Istposition der Korrekturachse(n) lässt sich ein (idealer) Verlauf der Fügestelle ermitteln, der durch eine stetige mathematische Funktion beschrieben werden kann. Die Genauigkeit der Nahtlageregelung wird durch Bestimmen einer Abweichung des Soll- oder Ist-Positionssignals vom idealen Funktionsverlauf beurteilt. Hierdurch wird es möglich, ein Maß für die Regelabweichung, d.h. die Abweichung der Position des Laserbearbeitungskopfes bzw. der Fokusfläche von der Position der Fügestelle zu erhalten. Diese Regelabweichung kann im Allgemeinen nicht auf direktem Wege erhalten werden, da die Fügestelle in der Nähe der Fokusfläche vom Schweißprozess verdeckt wird und daher dessen Position nicht gemessen werden kann.

Das erfindungsgemäße Verfahren kann im Anschluss oder interpolierend während des Laserschweißprozesses durchgeführt werden und ermöglicht anhand der erforderlichen oder tatsächlichen Korrektur-Achsbewegung der Stellachse die Überprüfung und Bewertung der Qualität der Nahtlageregelung. Es versteht sich, dass auch weitere Kenngrößen zur Bewertung der Qualität der Nahtlageregelung herangezogen werden können, die aus weiteren Messgrößen der Nahtlageregelung ermittelt werden.

Bei einer bevorzugten Variante wird eine stetige, insbesondere periodische Funktion für den Verlauf der Fügestelle vorgegeben, deren Parameter an den Verlauf der Soll- oder Istposition der Stellachse angepasst werden. Das vorgeschlagene Verfahren lässt sich insbesondere beim Schweißen von Werkstücken anwenden, bei denen der Verlauf der Fügestelle durch eine stetige mathematische Funktion ausreichend genau beschreibbar ist. Dies trifft beispielsweise beim Schweißen geradliniger Linearnähte an Profilen oder auch beim Schweißen von rotationssymmetrischen Werkstücken zu, bei denen die mathematische Funktion z.B. einen sinusförmigen Verlauf haben kann.

Bei einer bevorzugten Weiterbildung wird die Abweichung zwischen dem Verlauf der Soll- oder Istposition der Stellachse und dem Verlauf der Fügestelle als Summe der mittleren Fehlerquadrate (Chi-Quadrat-Fehler) bestimmt. Der Chi-Quadrat-Fehler stellt ein geeignetes Maß für die Güte der Anpassung des Verlaufs der Stellachsen-Soll- oder-Istposition an den Verlauf der Fügestelle dar, bei dem die Abweichung bzw. Differenz nicht nur lokal, sondern über einen Verlaufsbereich bestimmt werden kann. Es versteht sich, dass auch andere, dem Fachmann geläufige Maße für die Bestimmung der Abweichung herangezogen werden können.

Der Verlauf der Stellachsenposition wird in der Regel über einen vollen Umlauf einer Drehbewegung des Werkstücks ermittelt. In diesem Fall wird das typischerweise rotationssymmetrische Werkstück während des Laserschweißprozesses um eine Drehachse gedreht und die Stellachsenposition über den gesamten Schweißumlaufwinkel ermittelt, d.h. die Kenngröße wird erst nach dem Ende des Laserschweißprozesses bestimmt. Es versteht sich, dass es alternativ auch möglich ist, die Stellachsenposition nur über einen kleinen Winkelbereich von z.B. 20° zu ermitteln und dass auch in diesem Fall ein Vergleich mit der (idealen) Position der Fügestelle möglich ist, so dass die Kenngröße auch während des Schweißprozesses ermittelt und ggf. in den Schweißprozess bzw. die Nahtlageregelung eingegriffen werden kann, um die Qualität der Schweißung zu verbessern.

Bevorzugt wird der Verlauf der der Soll- oder Istposition einer Stellachse axial zur Fügestelle und/oder in Ausbreitungsrichtung des Laserstrahls ermittelt. Abweichungen vom korrekten Positionsverlauf des Laserstrahls zur Fügestelle werden während der Drehbewegung des Werkstücks anhand von Sollwerten der Nahtlageregelung mittels Korrekturachsbewegungen ausgeglichen. Die Korrektur wird hierbei in der Regel axial, d.h. zum Ausgleich eines konstanten lateralen Versatzes des Werkstücks und des Werkstück-Planlaufs, sowie radial, d.h. zur Korrektur des Rundlaufs durch Einstellung des Arbeitsabstands der Schweißoptik/ des Bearbeitungskopfs zum Werkstück, durchgeführt.

Bei einer vorteilhaften Variante wird mindestens eine weitere Kenngröße aus dem ermittelten Verlauf der Fügestelle bestimmt, insbesondere zur Beurteilung des Planlaufs eines rotationssymmetrischen Werkstücks oder des Versatzes des Werkstücks. Rotationssymmetrische Bauteile, die eine Symmetrieachse aufweisen, werden beim Schweißen häufig um eine Drehachse gedreht, welche senkrecht zur Strahlrichtung des Laserbearbeitungskopfs ausgerichtet ist. Die Ausrichtung der Drehachse kann jedoch von der Ausrichtung der Werkstück-Symmetrieachse abweichen, so dass das Werkstück eine Taumelbewegung ausführt. Die Taumelbewegung führt zu einem so genannten Planlauffehler in axialer Richtung, sowie zu einem Rundlauffehler in radialer Richtung, welche sich über den vollständigen Umfang des, Bauteils durch einen sinusförmigen Verlauf mit der Periodenanzahl 1 bzw. bei konstanter Geschwindigkeit der Drehbewegung durch eine Winkelgeschwindigkeit w = 1/(2π) [rad/s] beschreiben lassen. Weiterhin kann ein (konstanter) axialer Versatz zwischen der Position des Werkstücks und der Null-Position des Laserbearbeitungskopfs in axialer Richtung auftreten, welcher ebenfalls durch eine fehlerhafte Einspannung des Werkstücks entstehen kann. Alle oben aufgeführten Fehler können ohne eine Nahtlageregelung zu einer fehlerhaften Nahtpositionierung führen, wobei die Genauigkeit der Nahtlageregelung in der Regel umso besser ist, je geringer die oben aufgeführten Fehlpositionierungen ausfallen.

Das Bestimmen mindestens einer weiteren Kenngröße aus dem ermittelten Verlauf der der Istposition der Stellachse, insbesondere zur Beurteilung einer Hysterese des Werkstücks, hat sich als besonders vorteilhaft herausgestellt. Als Hysterese bezeichnet man die Differenz der axialen Stellachsenposition am Anfang und am Ende eines vollständigen Umlaufs bei einer Radialschweißung. Die Hysterese wird durch Verschiebung des Werkstücks während des Schweißprozesses ausgelöst, die z.B. durch die Erwärmung von Spannelementen hervorgerufen werden kann.

Bevorzugt wird mindestens eine weitere Kenngröße für die Genauigkeit der Nahtlageregelung bestimmt, die ausgewählt ist aus der Gruppe umfassend: Anzahl von Messaussetzern und Position der Fokusfläche auf dem Werkstück. Eine geringe Anzahl von Aussetzern bei der Messung, welche z.B. durch thermisch induzierte Bildstörungen beim Laserschweißen zu Stande kommen, stellt ein Maß für die Vertrauenswürdigkeit der Regelung dar. Durch die Auswertung der Position der Fokusfläche in lateraler Richtung können Rückschlüsse auf eine unzulässige Verschiebung bzw. Driftbewegung des Laserstrahls in der Optik gezogen werden.

Es ist günstig, mindestens eine Kenngröße bevorzugt nach dem Abschluss des Schweißprozesses mit einem zugehörigen Schwellwert zu vergleichen und beim Überschreiten des Schwellwerts das Werkstück als zu prüfend zu klassifizieren. Erst nach dem Schweißprozess kann dieser abschließend beurteilt werden, wobei das Überschreiten des Schwellwerts jeder einzelnen Kenngröße bereits zur Klassifizierung des Werkstücks als zu prüfendes Werkstück führen kann. Das Ergebnis der Klassifizierung des Werkstücks kann durch Ausgabe eines optischen oder akustischen Signals einem Bediener mitgeteilt werden, wobei in Abhängigkeit von der Kenngröße, deren Schwellwert überschritten wurde, auch eine Aussage über die Art des Schweißfehlers möglich ist. Bevorzugt wird an dem als zu prüfend klassifizierten Werkstück eine bei dem Laserschweißprozess gebildete Schweißnaht automatisch und/oder manuell überprüft. Für die manuelle Überprüfung wird das Werkstück aus der Fertigungskette ausgeschleust. Bei der automatischen Überprüfung der Schweißnaht kann das Werkstück an eine hierfür vorgesehene Kontrollstation in der Fertigungskette verbracht werden.

In einer besonders vorteilhaften Variante wird die Genauigkeit der Nahtlageregelung anhand von mindestens zwei Kenngrößen als ausreichend oder nicht ausreichend klassifiziert. Die Einzelprüfungen der Kenngrößen können zu einer Gesamtbeurteilung der Nahtlageregelung herangezogen werden, wobei aus dem Gesamtergebnis auf die Qualität der Schweißnaht geschlossen und eine umfassende Diagnose des Sensor- bzw. Aktor-Systems sowie der Schweißoptik ermöglicht wird. Es versteht sich, dass die Ergebnisse der Genauigkeitsprüfung auch für Dokumentationszwecke gespeichert werden können.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Laserbearbeitungskopfs mit einer an diesem angebrachten Sensoreinrichtung mit CMOS-Kamera,
- Fig. 2: eine schematische Darstellung von drei Messfenstern entlang einer Fügestelle eines Werkstücks,
- Fig. 3: eine schematische Darstellung eines rotationssymmetrischen Werkstücks bei einem Laserschweißprozess mit Fehlpositionierungen in axialer und in radialer Richtung,
- Fig. 4: eine schematische Darstellung analog Fig. 3 mit zwei in radialer bzw. axialer Richtung verlaufenden Stellachsen zum Bewegen eines Laserbearbeitungskopfes zur Korrektur der Fehlpositionierungen, und
- Fig. 5: den Verlauf der Stellachsenposition der in axialer Richtung ausgerichteten Stellachse sowie ein aus dieser ermittelter idealer Verlauf einer Fügestelle über dem Drehwinkel des. Werkstücks.

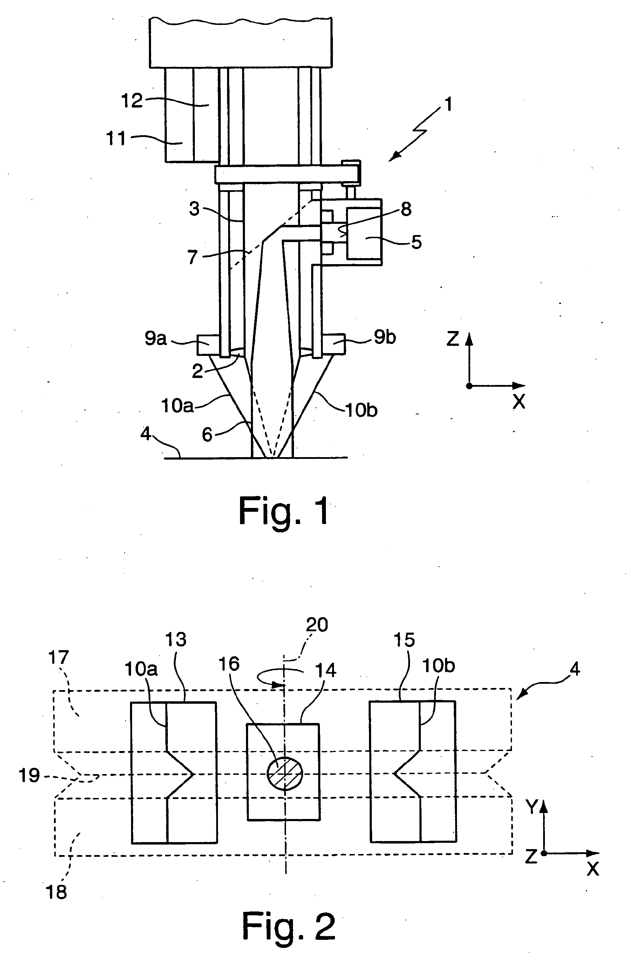

Fig. 1 zeigt einen Laserbearbeitungskopf 1 mit einer Fokussierlinse 2, welche einen dem Laserbearbeitungskopf 1 zugeführten Laserstrahl 3 auf eine (nicht gezeigte) Fokusfläche auf einem Werkstück 4 fokussiert, um dort eine Laserschweißung durchzuführen. Zur Überwachung eines Schweißbereichs auf dem Werkstück 4 ist an dem Laserbearbeitungskopf 1 eine CMOS-Kamera 5 angebracht. Der Strahlengang 6 der CMOS-Kamera 5 wird an einem teildurchlässigen Umlenkspiegel 7 gefaltet und auf eine Sensorfläche 8 der CMOS-Kamera 5 wird nicht nur die Fokusfläche des Laserstrahls 3 selbst, sondern einen größerer Ausschnitt des Werkstücks 4 in der Umgebung des Laserstrahls 3 abgebildet. Weiterhin sind am Laserbearbeitungskopf 1 zwei Linienprojektoren 9a, 9b vorgesehen, welche zwei Laserlichtlinien 10a, 10b in den von der CMOS-Kamera 5 überwachten Werkstückbereich projizieren. In Abhängigkeit von den durch die Kamera 5 erfassten Daten kann der Laserbearbeitungskopf 1 entlang zweier als Linearachsen ausgebildeten Stellachsen 11, 12 verschoben werden, um den Laserstrahl 3 an seine optimale Schweißposition zu verbringen, wie weiter unten im Einzelnen beschrieben ist.

An der Sensorfläche 8 der CMOS-Kamera 5 sind, wie in Fig. 2 gezeigt, drei Messbereiche 13 bis 15 gebildet, die in einer Linie entlang einer ersten Richtung (X-Richtung) hintereinander angeordnet sind. Der erste Messbereich (Pre-Messfenster) 13 erfasst während des Schweißprozesses einen Ausschnitt des Werkstücks 4 vorlaufend zum Laserstrahl 3 sowie die dorthin projizierte erste Laserlichtlinie 10a, der zweite Messbereich (In-Messfenster) 14 den unmittelbaren Bereich der Schweißung mit einer Fokusfläche 16 des Laserstrahls, und der dritte Messbereich (Post-Messfenster) 15 einen Ausschnitt des Werkstücks 4 nachlaufend zur Schweißung sowie die dorthin projizierte zweite Laserlichtlinie 10b. Die drei Messbereiche 13 bis 15 entsprechen den Bereichen, in denen die Intensität des auf die Sensorfläche 8 eingestrahlten Lichts mittels einer Auswerteeinrichtung (nicht gezeigt) ausgewertet wird. Es versteht sich, dass neben der gezeigten quadratischen Form für die Messbereiche 13 bis 15 auch andere, z.B. rechteckige Formen gewählt werden können, wobei bevorzugt die drei Messbereiche 13 bis 15 dieselbe Form und Abmessung aufweisen.

Fig. 2 zeigt ferner das rotationssymmetrische Werkstück 4, welches zwei Werkstückteile 17, 18 aufweist, die entlang einer Fügestelle 19 aneinander anliegen. Zum Durchführen eines Laserschweißprozesses wird das Werkstück 4 um eine Drehachse 20 gedreht, die in einer ersten, axialen Richtung (Y-Richtung) verläuft. Senkrecht zur axialen Richtung und senkrecht zur Bildebene verläuft eine zweite, radiale Richtung (Z-Richtung), die der Ausbreitungsrichtung des Laserstrahls 3 entspricht, dessen Fokusfläche 16 auf dem Werkstück 4 eine Schweißstelle erzeugt.

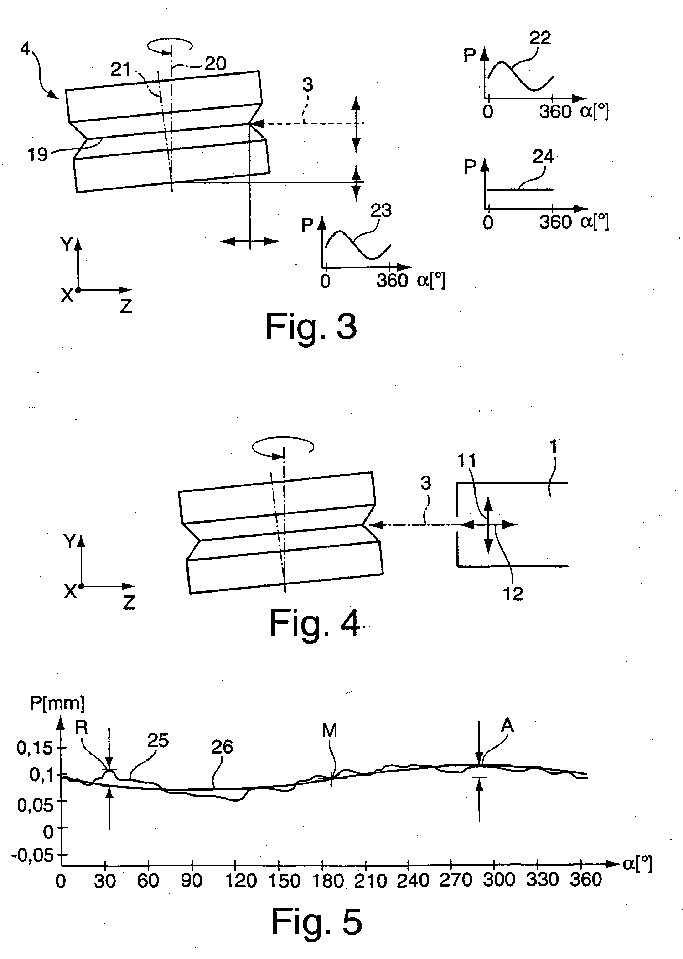

In Fig. 2 ist der Beginn der Laserschweißung gezeigt, bei welcher der erste sowie der dritte Messbereich 13, 15 der Erfassung der Position der Fügestelle 19 in Y- und Z-Richtung mittels der jeweils von der CMOS-Kamera 5 detektierten Laserlichtlinien 10a, 10b dienen, während der zweite Messbereich 14 zur Erfassung der Lage der Fokusfläche 16 des Laserstrahls 3 verwendet wird. Während des Schweißprozesses dreht sich das Werkstück 4 um die Drehachse 20, wobei sich hinter der Fokusfläche 16 eine (nicht gezeigte) Schweißnaht ausbildet, die im dritten Messbereich 15 überwacht wird. Der erste Messbereich 13 dient auch während des Schweißprozesses zur Erfassung der Position der Fügestelle 19. Aus der gemessenen Position der Fügestelle 19 in Y- und Z-Richtung werden in einer Bahnplanungseinheit Sollwerte für die Lage der Fokusfläche 16 errechnet. Dies ist erforderlich, da die Fügestelle 19 in der Praxis nicht wie in Fig. 2 gezeigt exakt senkrecht zur Drehachse 20 ausgerichtet ist, sondern wie in Fig. 3 gezeigt von dieser senkrechten Ausrichtung abweicht, da die Drehachse 20 und eine Symmetrieachse 21 des rotationssymmetrischen Werkstücks 4 aufgrund von Fehlpositionierungen bei der Einspannung des Werkstücks 4 in der Regel nicht zusammenfallen. Die in Fig. 3 gezeigte Ansicht ist im Vergleich zur in Fig. 2 gezeigten Ansicht um 90° in der X-Z-Ebene gedreht, so dass der durch einen Pfeil angedeutete Laserstrahl 3 sichtbar ist.

Bei der Drehung des Werkstücks 4 um die Drehachse 20 führt dieses eine Taumelbewegung aus, so dass sich die Lage der Fügestelle 19 sowohl in Y-Richtung als auch in Z-Richtung verändert. Die hierbei entstehenden Fehlpositionierungen werden durch drei Fehlertypen beschrieben: Planlauffehler, konstanter axialer Versatz sowie Rundlauffehler. Der Planlauffehler (in Y-Richtung) und der Rundlauffehler (in Ausbreitungsrichtung Z des Laserstrahls 3) weisen bei einem vollständigen Umlauf des Werkstücks 4 um die Drehachse 20 einen sinusförmigen Verlauf 22, 23 der Position P in Abhängigkeit vom Drehwinkel a auf, dessen Periodenlänge einem Umlauf entspricht. Der Versatz, der durch die Abweichung der Position des Werkstücks 4 in Y-Richtung von einer gewünschten Null-Lage herrührt, weist einen konstanten Verlauf 24 in Abhängigkeit vom Drehwinkel a auf.

Wie bereits oben dargestellt wird während der Drehbewegung des Werkstücks 4 die Position der Fügestelle 19 im Vorlauf zur Schweißung sowohl in Y-Richtung als auch in Z-Richtung gemessen und ein Sollwert für die Position der Fokusfläche 16 errechnet. Ferner kann eine Messung der Position der Fügestelle 19 in Z-Richtung z.B. durch Auswertung der Lage der Lichtschnitte 10a, 10b im Vorlauf und Nachlauf zur Schweißung erfolgen.

Die Nahtlageregelung steuert, wie auch in Fig. 4 gezeigt, die Stellachsen 11, 12 zur linearen Bewegung des Laserbearbeitungskopfs 1 in Y- bzw. Z-Richtung an. Mittels der Stellachse 11 in Y-Richtung können der konstante axiale Versatz des Werkstücks 4 sowie dessen Planlauffehler ausgeglichen werden, mittels der in Ausbreitungsrichtung Z des Laserstrahls 3 verlaufenden Stellachse 12 wird der. Rundlauffehler des Werkstücks 4 ausgeglichen. Es versteht sich, dass der Ausgleich nicht zwingend durch Bewegen des Laserbearbeitungskopfs 1 erfolgen muss, sondern dass es beispielsweise ebenfalls möglich ist, die Fokussierlinse 2 in dem Laserbearbeitungskopf 1 zu verschieben, die Form eines in diesem angeordneten adaptiven Umlenkspiegels zu verändern, einen in der Strahlführung vorgesehenen Spiegel zu verkippen oder den Anschluss einer Lichtleitfaser zur Zuführung des Laserstrahls 3 im Laserbearbeitungskopf 1 zu verschieben. Alle diese Elemente dienen somit jeweils als Stellachse bzw. zum Positionieren der Fokusfläche 16 auf dem Werkstück 4.

Zusätzlich zu den Messdaten der Lageregelung werden die sich daraus ergebenden Soll-Positionsdaten oder - bevorzugt - die tatsächlich ausgeführten Verfahrbewegungen, d.h. die tatsächlichen Positionen P der Stellachsen 11, 12 während des Schweißprozesses mit hoher Abtastrate erfasst und gespeichert, wie in Fig. 5 anhand eines Verlaufs 25 der Stellachsen-Istposition P der in Y-Richtung ausgerichteten Stellachse 11 über den gesamten bei der Schweißung verwendeten Drehwinkelbereich von 360° gezeigt ist. Da bekannt ist, dass der theoretische Verlauf 22 (vgl. Fig. 3) der Fügestelle 19 in Y-Richtung einer sinusförmigen Funktion mit einer Periodenlänge eines vollständigen Umlaufs des Werkstücks 4 entspricht, müssen als Parameter lediglich die (nicht gezeigte) Phase, der Mittelwert M sowie die Amplitude A (Abstand zwischen Mittelwert und Maximum) der Sinusfunktion bestimmt werden, was durch Anfitten z.B. mittels der Methode der kleinsten Fehlerquadrate oder mittels eines anderen hierzu geeigneten Verfahrens geschehen kann. Die Differenz der tatsächlichen Bewegung der Stellachse 11 von dem theoretischen Sinus-Verlauf 26 der Fügestelle 19 für den Drehwinkel α wird als Maß für die Regelabweichung R gewertet und kann als Kenngröße für die Nahtlageregelung dienen. Ein analoges Verfahren kann an der in Ausbreitungsrichtung Z des Laserstrahls 3 ausgerichteten Stellachse 12 durchgeführt werden.

Die Regelabweichung R und damit die Genauigkeit der Nahtlageregelung über den gesamten Drehwinkelbereich von 360° kann beispielsweise durch die Größe des Chi-Quadrat-Fehlers als Kenngröße charakterisiert werden, der bereits beim Anpassen des Verlaufs 26 der Fügestelle 19 an den Verlauf 25 der Position der Stellachse 11 minimiert wurde. Überschreitet der Chi-Quadrat-Fehler einen vorgegebenen Schwellwert, so folgt die Regelbewegung nicht einem plausiblen Verlauf der Fügestelle 19 und das Werkstück 4 kann als zu prüfend klassifiziert werden, so dass die Schweißnaht an dem Werkstück 4 automatisiert oder manuell überprüft wird, wobei in letzterem Fall das zu prüfende Werkstück 4 aus dem Fertigungsprozess ausgeschleust wird. Es versteht sich, dass beim Feststellen von zu großen Abweichungen ggf. auch auf das Überprüfen der Schweißnaht verzichtet und das Werkstück direkt als Ausschuss eingestuft werden kann.

Neben der Abweichung zwischen dem Verlauf 25 der Stellachsen-Istposition P und dem (theoretischen) Verlauf der Fügestelle 26 können auch andere Kenngrößen des Schweißprozesses bestimmt und mit zugehörigen Schwellwerten verglichen werden. Hierbei kann die Überschreitung des Schwellwerts jeder einzelnen Kenngröße zur Ausschleusung des Werkstücks bzw. zur Nachprüfung der Schweißnaht führen. Ferner kann in Abhängigkeit von der Art des überschrittenen Schwellwerts eine Aussage über die Fehlerart bzw. Fehlerquelle getroffen werden.

Als weitere Kenngröße kann z.B. die Größe des Planlauffehlers, entsprechend der Amplitude A des Verlaufs 26 der Fügestelle 19 herangezogen werden, welcher ein Maß für die Taumelbewegung des Werkstücks 4 ist. Auch kann die Größe des axialen Werkstückversatzes, entsprechend dem Mittelwert M des sinusförmigen Verlaufs 26, als Kenngröße herangezogen werden. Beide Kenngrößen A; M können auf eine Verschmutzung der Spannvorrichtung oder eine Maßabweichung des Werkstücks 4 hindeuten.

Ferner können Messgrößen des Verlaufs 25 der Istposition P der Stellachsen 11, 12 als Kenngrößen dienen, z.B. kann die Hysterese, d.h. die Differenz zwischen der Position der Stellachse 11, 12 am Beginn und am Ende des Schweißprozesses, bestimmt und daraus auf eine Verschiebung des Werkstücks 4 durch Erwärmung von Spannelementen während des Schweißprozesses geschlossen werden.

Weitere Kenngrößen können in den drei Messbereichen 13 bis 15 von Fig. 2 bestimmt werden; beispielsweise die Zahl der Messaussetzer, welche ein Maß für die Vertrauenswürdigkeit der Regelung darstellen. Weiterhin kann durch Bestimmen der Lage des Lichtschnitts 10a im ersten Messbereich 13 und/oder der Lage des Lichtschnitts 10b im dritten Messbereich 15 während des Schweißprozesses der Abstand der Optik des Laserbearbeitungskopfes 1 zur Oberfläche des Werkstücks 4 bestimmt werden und dessen Verränderung als Kenngröße dienen.

Auch aus der Kenntnis der lateralen Lage der Fokusfläche 16 auf dem Werkstück 4 innerhalb des zweiten Messbereichs 14 kann eine Kenngröße bestimmt werden, welche für die (unzulässige) Verschiebung bzw. Drift des Laserstrahls 3 in einer nicht gezeigten Optik des Laserbearbeitungskopfes 1 charakteristisch ist.

Der Fachmann wird verstehen, dass neben den oben aufgeführten Kenngrößen auch weitere, hier nicht im Einzelnen aufgeführte Kenngrößen für die Genauigkeit der Nahtlageregelung bestimmt werden können. Auch wurde bei dem oben beschriebenen Verfahren eine Aufzeichnung und Auswertung der Messdaten während des Schweißprozesses über den kompletten Schweißumlaufwinkel von 360° vorgenommen. Es versteht sich jedoch, dass die Auswertung der Daten nicht nur direkt im Anschluss an den Schweißprozess, sondern auch extrapolierend simultan zum Schweißprozess durchgeführt werden kann, wobei zur Auswertung nur ein kleiner Drehwinkelbereich von z.B. 15° herangezogen wird. Wird in diesem Fall ein Überschreiten des Schwellwerts detektiert, kann ggf. in den Schweißprozess eingegriffen werden, um die Genauigkeit der Nahtlageregelung zu verbessern.

Anhand der oben aufgeführten und ggf. weiterer Kenngrößen kann mittels eines heuristischen Verfahrens eine Gesamtbeurteilung der Nahtlageregelung erfolgen, so dass diese z.B. mit "in Ordnung" bzw. "nicht in Ordnung" charakterisiert werden kann. Hierdurch kann die Genauigkeit der Nahtlageregelung geprüft und damit die Qualität der bei dem Laserschweißprozess an dem Werkstück 4 gebildeten Schweißnaht sichergestellt werden. Ferner ermöglicht das Verfahren eine umfassende Diagnose des Sensor- und Aktorsystems sowie der Schweißoptik.

Es versteht sich, dass das oben beschriebene Verfahren nicht auf das Schweißen von Radialnähten beschränkt ist, sondern immer dann angewendet werden kann, wenn sich der (theoretische) Verlauf der Fügestelle durch eine stetige mathematische Funktion ausreichend genau beschrieben lässt, wobei unter einer mathematischen Funktion im Sinne dieser Anmeldung auch Interpolationsfunktionen wie z.B. so genannte Splines verstanden werden. Insbesondere lässt sich das oben beschriebene Verfahren auch vorteilhaft beim Schweißen geradliniger Linearnähte an Profilen einsetzen.

## Patentansprüche

1. Verfahren zum Bestimmen mindestens einer Kenngröße (R, A, M) für die Genauigkeit der Nahtlageregelung eines Laserschweißprozesses an einem bevorzugt rotationssymmetrischen Werkstück (4), umfassend die Schritte: Ermitteln des zeitlichen Verlaufs (25) einer Soll- oder Istposition (P) einer Stellachse (11, 12) zum Positionieren einer Fokusfläche (16) eines Laserstrahls (3) auf dem Werkstück (4),
Ermitteln des Verlaufs (26) einer Fügestelle (19) an dem Werkstück (4) aus dem Verlauf (25) der Soll- oder Istposition (P) der Stellachse (11, 12), sowie Bestimmen einer Abweichung wischen dem Verlauf (25) der Soll- oder Istposition (P) der Stellachse (11, 12) und dem ermittelten Verlauf (26) der Fügestelle (19) als Kenngröße (R) für die Genauigkeit der Nahtlageregelung.

2. Verfahren nach Anspruch 1, bei dem eine stetige, insbesondere periodische Funktion für den Verlauf (26) der Fügestelle (19) vorgegeben wird, deren Parameter (A, M) aus dem Verlauf (25) der Soll- oder Istposition (P) der Stellachse (11, 12) ermittelt werden.

3. Verfahren nach Anspruch 1 oder 2, bei dem die Abweichung zwischen dem Verlauf (25) der Soll- oder Istposition (P) der Stellachse (11, 12) und dem Verlauf (26) der Fügesstelle (19) als Summe der mittleren Fehlerquadrate bestimmt wird.

4. Verfahren nach einem der vorhergehenden Ansprüche, bei dem der Verlauf (26) einer Soll- oder Istposition (P) einer Stellachse (11, 12) axial zur Fügestelle (19) und/oder in Ausbreitungsrichtung des Laserstrahls (3) ermittelt wird.

5. Verfahren nach einem der vorhergehenden Ansprüche, bei dem mindestens eine weitere Kenngröße (M, A) aus dem ermittelten Verlauf (26) der Fügestelle (19) bestimmt wird, insbesondere zur Beurteilung eines Planlaufs oder ein Versatzes des Werkstücks (4).

6. Verfahren nach einem der vorhergehenden Ansprüche, bei dem mindestens eine weitere Kenngröße aus dem Verlauf (25) der Istposition (P) der Stellachse (11) bestimmt wird, insbesondere zur Beurteilung einer Hysterese des Werkstücks (4).

7. Verfahren nach einem der vorhergehenden Ansprüche, bei dem mindestens eine weitere Kenngröße bestimmt wird, die ausgewählt ist aus der Gruppe umfassend: Anzahl von Messaussetzern und Position der Fokusfläche (16) auf dem Werkstück (4).

8. Verfahren nach einem der vorhergehenden Ansprüche, bei dem mindestens eine Kenngröße (R, M, A) bevorzugt nach dem Abschluss des Schweißprozesses mit einem zugehörigen Schwellwert verglichen und beim Überschreiten des Schwellwerts das Werkstück (4) als zu prüfend klassifiziert wird.

9. Verfahren nach Anspruch 8, bei dem an dem als zu prüfend klassifizierten Werkstück (4) eine beim Laserschweißprozess gebildete Schweißnaht automatisch und/oder manuell überprüft wird.

10. Verfahren nach einem der vorhergehenden Ansprüche, bei dem die Genauigkeit der Nahtlageregelung anhand von mindestens zwei Kenngrößen (R, M, A) ermittelt wird.

## Claims

1. Method for determining at least one parameter (R, A, M) for seam position regulation accuracy of a laser welding process on a workpiece (4) that is preferably rotationally symmetrical, comprising the steps of:
ascertaining the course over time (25) of a desired or actual position (P) of an adjustment axis (11, 12) for positioning of a focus area (16) of a laser beam (3) on the workpiece (4), ascertaining the course (26) of a join location (19) on the workpiece (4) from the course (25) of the desired or actual position (P) of the adjustment axis (11, 12), and
determining a deviation between the course (25) of the desired or actual position (P) of the adjustment axis (11, 12) and the ascertained course (26) of the join location (19) as a parameter (R) for seam position regulation accuracy.

2. Method according to claim 1, wherein a continuous, especially periodic, function is specified for the course (26) of the join location (19), the parameters (A, M) of which are ascertained from the course (25) of the desired or actual position (P) of the adjustment axis (11, 12).

3. Method according to claim 1 or 2, wherein the deviation between the course (25) of the desired or actual position (P) of the adjustment axis (11, 12) and the course (26) of the join location (19) is determined as the sum of the mean square errors.

4. Method according to any one of the preceding claims, wherein the course (26) of a desired or actual position (P) of an adjustment axis (11, 12) is ascertained axially with respect to the join location (19) and/or in the direction of propagation of the laser beam (3).

5. Method according to any one of the preceding claims, wherein at least one further parameter (M, A) is determined from the ascertained course (26) of the join location (19), especially for assessing axial run-out or misalignment of the workpiece (4).

6. Method according to any one of the preceding claims, wherein at least one further parameter is determined from the course (25) of the actual position (P) of the adjustment axis (11), especially for assessing hysteresis of the workpiece (4).

7. Method according to any one of the preceding claims, wherein at least one further parameter, selected from the group comprising number of failed measurements and position of the focus area (16) on the workpiece (4), is determined.

8. Method according to any one of the preceding claims, wherein at least one parameter (R, M, A) is compared with an associated threshold value, preferably after completion of the welding process, and, if the threshold value is exceeded, the workpiece (4) is classified as for inspection.

9. Method according to claim 8, wherein a weld seam formed during the laser welding process is examined automatically and/or manually on the workpiece (4) classified as for inspection.

10. Method according to any one of the preceding claims, wherein seam position regulation accuracy is ascertained on the basis of at least two parameters (R, M, A).

## Revendications

1. Procédé pour déterminer au moins une grandeur caractéristique (R, A, M) de la précision du réglage de la position de soudure d'un processus de soudage au laser sur une pièce (4) de préférence à symétrie de révolution, comprenant les étapes suivantes :
détermination du tracé dans le temps (25) d'une position de consigne ou réelle (P) d'un axe de réglage (11, 12) pour positionner une surface focale (16) d'un faisceau laser (3) sur la pièce (4),
détermination du tracé (26) d'un joint d'assemblage (19) sur la pièce (4) à partir du tracé (25) de la position de consigne ou réelle (P) de l'axe de réglage (11, 12) ainsi que détermination d'un écart entre le tracé (25) de la position de consigne ou réelle (P) de l'axe de réglage (11, 12) et le tracé déterminé (26) du joint d'assemblage (19) en tant que grandeur caractéristique (R) de la précision du réglage de la position de soudure.

2. Procédé selon la revendication 1, dans lequel une fonction continue, en particulier périodique, est prédéfinie pour le tracé (26) d'un joint d'assemblage (19), dont les paramètres (A, M) sont déterminés à partir du tracé (25) de la position de consigne ou réelle (P) de l'axe de réglage (11, 12).

3. Procédé selon la revendication 1 ou 2, dans lequel l'écart entre le tracé (25) de la position de consigne ou réelle (P) de l'axe de réglage (11, 12) et le tracé (26) du joint d'assemblage (19) est déterminé en tant que somme des carrés moyens des erreurs.

4. Procédé selon l'une des revendications précédentes, dans lequel le tracé (26) d'une position de consigne ou réelle (P) d'un axe de réglage (11, 12) est déterminé axialement au joint d'assemblage (19) et/ou dans la direction de propagation du faisceau laser (3).

5. Procédé selon l'une des revendications précédentes, dans lequel au moins une autre grandeur caractéristique (M, A) est déterminée à partir du tracé déterminé (26) du joint d'assemblage (19), en particulier pour évaluer une concentricité axiale ou un désalignement de la pièce (4).

6. Procédé selon l'une des revendications précédentes, dans lequel au moins une autre grandeur caractéristique est déterminée à partir du tracé (25) de la position réelle (P) de l'axe de réglage (11), en particulier pour évaluer une hystérésis de la pièce (4).

7. Procédé selon l'une des revendications précédentes, dans lequel au moins une autre grandeur caractéristique est déterminée, qui est sélectionnée parmi le groupe comprenant : nombre de ratés de mesure et position de la surface focale (16) sur la pièce (4).

8. Procédé selon l'une des revendications précédentes, dans lequel au moins une grandeur caractéristique (R, M, A) est comparée avec une valeur seuil correspondante de préférence après la fin du processus de soudage et, en cas de dépassement de la valeur seuil, la pièce (4) est classifiée comme étant à contrôler.

9. Procédé selon la revendication 8, dans lequel, sur la pièce (4) classifiée comme étant à contrôler, une soudure formée lors du processus de soudage au laser est vérifiée automatiquement et/ou manuellement.

10. Procédé selon l'une des revendications précédentes, dans lequel la précision du réglage de la position de soudure est déterminée à l'aide d'au moins deux grandeurs caractéristiques (R, M, A).
